(19) Europäisches Patentamt
European Patent Office
Office européen des brevets

(11) **EP 2 930 830 B1**

(12) **EUROPÄISCHE PATENTSCHRIFT**

(45) Veröffentlichungstag und Bekanntmachung des Hinweises auf die Patenterteilung:
**29.09.2021   Patentblatt 2021/39**

(51) Int Cl.:
*H02K 41/03* *(2006.01)*    *B65G 54/02* *(2006.01)*

(21) Anmeldenummer: **14163869.2**

(22) Anmeldetag: **08.04.2014**

(54) **Magnetbahn für eine Transportvorrichtung**

Magnet track for a transport device

Piste magnétique pour un dispositif de transport

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.10.2015   Patentblatt 2015/42**

(73) Patentinhaber: ETEL S.A.
**2112 Môtiers (CH)**

(72) Erfinder:
• **Mottier, Samuel**
  **2000 Neuchâtel (CH)**
• **Coleman, Ralph**
  **2114 Fleurier (CH)**

(74) Vertreter: **Pleyer, Hans Anno**
**Dr. Johannes Heidenhain GmbH
Patentabteilung
Postfach 12 60
83292 Traunreut (DE)**

(56) Entgegenhaltungen:
**WO-A1-2008/125121    JP-A- H0 241 650
US-B2- 8 384 251**

• **T. M. ERM ET AL: "<title>A cost effective direct drive option for the Thirty Meter Telescope</title>", PROCEEDINGS OF SPIE, Bd. 6273, 14. Juni 2006 (2006-06-14), Seiten 627335-627335-8, XP055148830, ISSN: 0277-786X, DOI: 10.1117/12.672204**
• **None**

## Beschreibung

### GEBIET DER TECHNIK

Die vorliegende Erfindung betrifft eine Magnetbahn für eine Transportvorrichtung, mit der mehrere Läufer entlang der Magnetbahn bewegt werden können. Die Erfindung betrifft außerdem eine Transportvorrichtung, die eine solche Magnetbahn umfasst.

Mit solchen Transportvorrichtungen können Werkstücke zu und von mehreren entlang der Magnetbahn angeordneten Bearbeitungsstationen transportiert werden. Die Magnetbahn umfasst dabei sowohl lineare als auch gekrümmte Bereiche und bildet oft eine geschlossene Bahn. Als Antrieb werden Linearmotoren eingesetzt, deren Primärteile sich jeweils in einem Läufer befinden. Mehrere Läufer können sich das als Magnetbahn mit regelmäßig aneinander gereihten Magneten ausgebildete Sekundärteil teilen und dabei voneinander unabhängig bewegt werden.

### STAND DER TECHNIK

In der US 5642013 ist ein Linearmotor beschrieben, der sich aufgrund seiner besonders niedrigen Rastkräfte gut für eine Transportvorrichtung der hier beschriebenen Art eignet. Das Primärteil dieses Linearmotors besteht aus einem Eisenkern mit geraden Zahnflanken, die von Spulen umwickelt sind. Das Sekundärteil besteht aus regelmäßig aneinander gereihten Magneten abwechselnder Polarität. Besonders gut ist dieser Linearmotor in der Figur 4 der US 5642013 zu erkennen.

In der WO2008/087130 A1 ist eine Vorrichtung beschrieben, bei der eine Vielzahl von linearen Primärteilen entlang einer als Kreisbahn ausgebildeten Magnetbahn bewegt werden. Während die Primärteile in den Läufern wie in einem Linearmotor gerade ausgebildet sind, sind die Magnete auf der Kreisbahn radial ausgerichtet, um entlang der Kreisbahn eine regelmäßige magnetische Periode zu erhalten. Für jeden benötigten Radius einer Kreisbahn muss die Anordnung der Magnete außerdem angepasst werden, was einen erheblichen Aufwand bedeutet.

In der DE 102009002606 A1 ist eine Transportvorrichtung der hier interessierenden Art beschrieben, die sowohl lineare als auch gekrümmte Bereiche aufweist, und deren Transportbahn in sich geschlossen ist. Hier weist die Transportbahn das Primärteil mit regelmäßig angeordneten Spulenelementen auf, während die Läufer Magnete mit abwechselnder Polarität aufweisen. Das Problem der Anordnung der Spulen in den linearen und gekrümmten Bereichen ist hier gelöst, indem zwei Bahnen vorgesehen sind, wobei die innere der beiden Bahnen in den linearen Bereichen parallel ausgerichtete Spulenelemente aufweist, während die äußere der beiden Bahnen in den gekrümmten Bereichen Spulenelemente aufweist, die radial in Richtung des Krümmungsradius ausgerichtet sind. Entsprechend weist ein Läufer sowohl parallel ausgerichtete Magnete als auch radial ausgerichtete Magnete auf. Durch die radiale Ausrichtung der Magnete in den Läufern ist allerdings ein Krümmungsradius fest vorgeben. Die Transportbahn ist mit ihren beiden verschiedenen Bahnen außerdem relativ aufwändig zu fertigen.

Im Aufsatz "A cost effective direct drive option for the Thirty Meter Telescope", Proc. SPIE, Vol. 6273, 627335 (2006); DOI:10.1117/12.672204, ist eine Magnetbahn gemäß dem Oberbegriff des Anspruchs 1 offenbart. Es wird dort eine Transportvorrichtung basierend auf Standardkomponenten eines Linearmotors beschrieben, mit der ein Teleskop mit großem Durchmesser auf einer Kreisbahn positioniert wird. Lineare Abschnitte des Sekundärteils sind nacheinander unter einem Winkel zueinander positioniert, so dass die Abschnitte eine Kreisbahn annähern. Die Polarität der Magnete des Sekundärteils kehrt sich dabei auch über die Abschnitte hinweg von Magnet zu Magnet um. An den Übergängen von einem Abschnitt zum nächsten ist dadurch die Periodizität des Magnetfelds des Sekundärteils gestört, es entstehen im Vergleich zum linearen Fall höhere Rastkräfte.

### ZUSAMMENFASSUNG DER ERFINDUNG

Es ist daher Aufgabe der Erfindung, mit geringem Aufwand eine verbesserte Magnetbahn für eine Transportvorrichtung sowie eine entsprechende Transportvorrichtung zu schaffen, so dass ein Läufer der Transportvorrichtung mit einem Primärteil eines Linearmotors auf linearen und gekrümmten Bahnen bewegt werden kann.

Diese Aufgabe wird gelöst durch eine Vorrichtung gemäß Anspruch 1. Vorteilhafte Details dieser Vorrichtung ergeben sich aus den von Anspruch 1 abhängigen Ansprüchen.

Es wird eine Magnetbahn für eine Transportvorrichtung zur Bewegung eines Läufers entlang der Magnetbahn beschrieben. Die Magnetbahn ist aus mehreren linearen Abschnitten mit jeweils einer geraden Anzahl von auf einem Träger angeordneten Magneten abwechselnder Polarität aufgebaut, wobei sich in linearen Bereichen der Magnetbahn die magnetische Ausrichtung der Magnete über aneinander grenzende Abschnitte hinweg in regelmäßigen Intervallen umkehrt. In gekrümmten Bereichen der Magnetbahn ist die Polarität zweier benachbarter, also nebeneinander liegender Magnete verschiedener Abschnitte jedoch gleich.

Mit der Polarität der Magnete ist deren magnetische Ausrichtung gemeint. Die Magnete sind senkrecht zur Ebene der Magnetbahn magnetisiert, so dass dem Läufer bzw. dessen Primärteil entweder ein magnetischer Nordpol oder ein magnetischer Südpol des jeweiligen Magneten zugewandt ist.

Die Magnetbahn lässt sich somit aus einer Vielzahl von immer gleichen Abschnitten aufbauen, wie sie auch für einen herkömmlichen Linearmotor verwendet werden. Die Abschnitte umfassen jeweils einen Träger, auf dem eine gerade Anzahl von Magneten in regelmäßigen Abständen und mit wechselnder magnetischer Ausrichtung angeordnet ist. Durch eine Aneinanderreihung einer Vielzahl solcher Abschnitte bzw. Träger lässt sich eine beliebig lange Magnetbahn erzeugen, die in den linearen Bereichen dem eines herkömmlichen Linearmotors entspricht, und die dort auch dank niedriger Rastkräfte eine sehr genaue Positionierung der Läufer ermöglicht. In den gekrümmten Bereichen wird jeder zweite Träger relativ zu seinem Vorgänger um etwa 180 Grad um eine senkrecht auf die Ebene der Magnetbahn stehende Achse verdreht eingebaut. Der Abstand zu den benachbarten Trägern wird dabei etwas vergrößert und die Ausrichtung der gewünschten Krümmung angepasst. Durch diese Abweichungen von der regelmäßigen Periodizität der Magnetanordnung entstehen etwas größere Rastkräfte als in den linearen Bereichen, was aber in den gekrümmten Bereichen solcher Transportvorrichtungen meist akzeptabel ist, bzw. bei der Anordnung der Bearbeitungsstationen berücksichtigt werden kann.

Durch die erfindungsgemäße Anordnung der linearen Abschnitte bzw. der Träger und Magnete kann also eine Magnetbahn für eine Transportvorrichtung mit linearen und gekrümmten Bereichen aus den üblichen Bestandteilen einer Magnetbahn eines Linearmotors aufgebaut werden. Besondere Bauteile mit spezieller Ausrichtung der Magnete wie im Stand der Technik sind nicht notwendig. Läufer, die jeweils ein Primärteil eines Linearmotors enthalten, lassen sich auf dieser als Sekundärteil des Linearmotors wirkenden Magnetbahn bewegen.

Weitere Vorteile und Einzelheiten der vorliegenden Erfindung ergeben sich aus der nachfolgenden Beschreibung verschiedener Ausführungsformen anhand der Figur.

## KURZE BESCHREIBUNG DER ZEICHNUNGEN

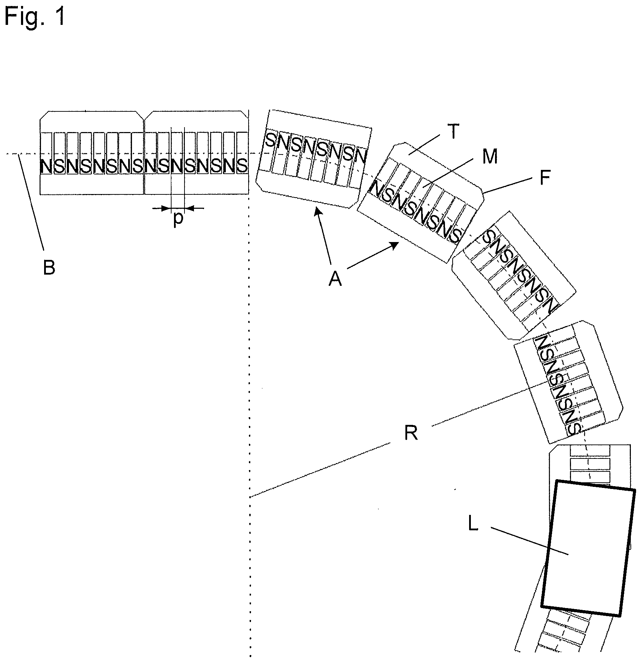

Dabei zeigt die Figur 1 eine Transportvorrichtung mit einer Magnetbahn, die aus mehreren gleichen Abschnitten aufgebaut ist.

## BESCHREIBUNG DER AUSFÜHRUNGSFORMEN

Gemäß der Figur 1 weist ein einzelner Abschnitt A einen Träger T und eine gerade Anzahl von auf dem Träger T quer zur Richtung der Magnetbahn B angeordnete Magnete M auf. Die Magnete M sind in regelmäßigen Intervallen bzw. Abständen p und mit wechselnder Polarität auf dem Träger T angeordnet. Ein Läufer L, der das Primärteil eines Linearmotors gemäß dem Stand der Technik enthält, wird entlang der Magnetbahn angetrieben und positioniert.

Jeder Träger T weist eine Markierung F auf, die es ermöglicht, die Polarität der Magnete M zu erkennen. In der Figur 1 sind hierzu jeweils zwei Ecken jedes Trägers T abgeschrägt. Betrachtet man einen Abschnitt A so, dass die Markierungen F an der Oberkante des Trägers T liegen, zeigt am linken Magnet M ein magnetischer Nordpol zum Läufer L.

Links der senkrechten gepunkteten Linie weist die Magnetbahn B einen linearen Bereich auf, dort sind die Abschnitte A wie in einem Linearmotor üblich nebeneinander angeordnet, so dass sich insgesamt eine lineare Magnetbahn ergibt, bei der sich die magnetische Ausrichtung der Magnete M über aneinander grenzende Abschnitte A hinweg in regelmäßigen Intervallen p umkehrt. Diese Intervalle p werden auch als Polabstand p oder "pole pitch" bezeichnet. Es ist zu erkennen, dass sich die Markierungen F der Träger T hier jeweils auf derselben Seite der Magnetbahn B befinden. Die Abfolge der magnetischen Ausrichtung der 16 Magnete M zweier Abschnitte A ist also jeweils

N-S-N-S-N-S-N-S-N-S-N-S-N-S-N-S,

wobei mit den Bindestrichen jeweils ein Polabstand p angedeutet ist.

Im Gegensatz dazu ist rechts der senkrechten, gepunkteten Linie im gekrümmten Bereich der Magnetbahn B jeder zweite Träger T um etwas mehr als 180 Grad um eine Achse senkrecht zur Ebene der Magnetbahn B gegenüber seinem Vorgänger gedreht, was sich gut an den abgeschrägten Ecken der Träger T und auch an der Angabe der Polarität der Magnete M ablesen lässt. Die Markierungen F zweier benachbarter Abschnitte A liegen hier auf verschiedenen Seiten der Magnetbahn B.

Zwei nebeneinander liegende Magnete M benachbarter Abschnitte haben hier also gleiche Polarität:

N-S-N-S-N-S-N-S-x-S-N-S-N-S-N-S-N,

wobei mit "-x-" zwischen den zwei benachbarten Südpolen ein vergrößerter Abstand andeutet ist, der also größer als der Polabstand p zwischen den Magneten M innerhalb eines Abschnitts A ist. Dies ist der Tatsache geschuldet, dass die beiden Abschnitte A unter einem gewissen, vom Krümmungsradius R der Magnetbahn B abhängigen Winkel zueinander angeordnet werden müssen. Der vergrößerte Abstand wird dabei so gewählt, dass die durch die Krümmung der Magnetbahn B zusätzlich entstehenden Rastkräfte begrenzt werden. Hierzu werden zwei aufeinander folgende Abschnitte A mit jeweils k Magneten mit Polabstand p so positioniert, dass deren Zentren auf einer gedachten Kreisbahn mit Radius R (entsprechend dem gewünschten Verlauf der Magnetbahn B) einen Abstand von p * (k + 1) aufweisen, während dieser Abstand im linearen Fall p * k ist.

Die Magnete M eines Abschnitts A schneiden die durch das Zentrum des Abschnitts verlaufende Tangente an die gedachte Kreisbahn senkrecht. Das Zentrum eines Abschnitts A ist dabei der Flächenschwerpunkt der Magnete M eines Abschnitts A. Während also in linearen Bereichen der Kreisbahn B die Abschnitte in Schritten von k * p angeordnet sind, vergrößert sich dieser Abstand in gekrümmten Bereichen um einen Polabstand auf p * (k + 1).

Verglichen mit der Anordnung der Magnete M auf einer linearen Magnetbahn B fehlt im Beispiel oben also ein Nordpol N, was zu zusätzlichen Rastkräften führt. Der dann wieder folgende Südpol S sitzt aber in etwa an der Stelle, an der im linearen Fall der nächste Südpol folgen würde. Die durch die Krümmung der Magnetbahn B zusätzlich entstehenden Rastkräfte werden so begrenzt.

Liegt eine Positionsmesseinrichtung für die auf der Magnetbahn B bewegten Läufer L entlang der eingezeichneten, die Magnete M mittig schneidenden Magnetbahn B, kann ein Lageregler für die Läufer L die linearen und gekrümmten Bereichen der Magnetbahn B völlig gleich behandeln. Irgendwelche Vorkehrungen bezüglich der Bestromung der Motorphasen der Primärteile in den Läufern L abhängig vom aktuellen Standort sind dann nicht notwendig. Eine solche Positionsmesseinrichtung kann ein Maßband mit einer optisch auslesbaren Teilungsstruktur umfassen, das entlang der Magnetbahn B verlegt ist, und das von optischen Abtastköpfen an den Läufern L abgetastet wird, um die aktuelle Position jedes Läufers L zu bestimmen. Die so ermittelte Position kann in üblicher Weise in einem Regelkreis verwendet werden.

Bei gegebener Anzahl k von Magneten M pro Abschnitt A und gegebenem Polabstand p entscheidet die Anzahl n der Abschnitte A auf dem Kreisbogen über dessen möglichen Krümmungsradius R. Für einen Kreisbogen über einen Winkel von 180 Grad, mit dem die Richtung eines Läufers L umgekehrt werden kann, gilt:

$$R = (p * ( n * (k + 1) + 1)) / \pi$$

So kann mit neun Abschnitten A mit jeweils acht Magneten M, die mit einer magnetischen Periode von 32 mm (als mit einem Polabstand p von 16 mm) angeordnet sind, ein Halbkreis mit einem Radius von ca. 418 mm abgedeckt werden.

Allgemeiner gilt für den Zusammenhang dieser Größen für einen Kreisbogen, der einen beliebigen Winkel $\alpha$ überstreicht:

$$R = (p * ( n * (k + 1) + 1)) / \alpha,$$

wobei der Winkel $\alpha$ im Bogenmaß einzusetzen ist.

## Patentansprüche

1. Magnetbahn für eine Transportvorrichtung zur Bewegung eines Läufers (L) entlang der Magnetbahn (B), wobei die Magnetbahn (B) aus mehreren linearen Abschnitten (A) mit jeweils einer geraden Anzahl von auf einem Träger (T) angeordneten Magneten (M) abwechselnder Polarität aufgebaut ist, wobei sich in linearen Bereichen der Magnetbahn (B) die Polarität benachbarter Magnete (M) über aneinander grenzende Abschnitte (A) hinweg in regelmäßigen Intervallen (p) umkehrt, **dadurch gekennzeich-**

**net, dass** in gekrümmten Bereichen der Magnetbahn (B) die Polarität zweier benachbarter Magnete (M) verschiedener Abschnitte (A) gleich ist, und dass in linearen Bereichen der Magnetbahn (B) die Abschnitte (A) in Schritten von k * p auf der Magnetbahn (B) angeordnet sind, während in gekrümmten Bereichen der Magnetbahn (B) zwei aufeinander folgende Abschnitte (A) so positioniert sind, dass Zentren der Abschnitte (A) auf einer gedachten Kreisbahn mit einem der Krümmung der Magnetbahn (B) entsprechenden Radius (R) in Abständen von p * (k + 1) angeordnet sind, wobei das Zentrum eines jeden Abschnitts (A) der Flächenschwerpunkt der Magnete (M) dieses Abschnitts (A) ist, und wobei k die Anzahl der Magnete (M) eines Abschnitts (A) und p deren Polabstand (p) ist, und dass die Magnete (M) eines jeden Abschnitts (A) eine durch das Zentrum jenes Abschnitts (A) verlaufende Tangente an die gedachte Kreisbahn senkrecht schneiden .

2. Magnetbahn nach Anspruch 1, **dadurch gekennzeichnet, dass** die Magnetbahn (B) aus einer Vielzahl von identischen linearen Abschnitten (A) aufgebaut ist.

3. Magnetbahn nach einem der vorhergehenden Ansprüche, **dadurch gekennzeichnet, dass** für einen gekrümmten Bereich der Magnetbahn (B) die Beziehung R = (p * ( n * (k + 1) + 1)) / $\alpha$ erfüllt ist, wenn R der Krümmungsradius der gedachten Kreisbahn in diesem Bereich ist, $\alpha$ der Winkel, den der gekrümmte Bereich umschließt, k die Anzahl der Magnete (M) eines Abschnitts (A), p deren Polabstand (p) und n die Anzahl der Abschnitte (A) in diesem gekrümmten Bereich ist.

4. Transportvorrichtung mit Linearantrieb, umfassend eine Magnetbahn (B) gemäß einem der vorhergehenden Ansprüche, sowie einen Läufer (L), der ein Primärteil des Linearantriebs enthält, das auf die ein Sekundärteil des Linearantriebs bildende Magnetbahn (B) ausgerichtet ist.

## Claims

1. Magnetic track for a transport device for moving a runner (L) along the magnetic track (B), wherein the magnetic track (B) is built up from a plurality of linear sections (A) each having an even number of magnets (M) of alternating polarity arranged on a support (T), wherein the polarity of adjacent magnets (M) in linear regions of the magnetic track (B) reverses at regular intervals (p) over mutually adjacent sections (A), **characterized in that** in curved regions of the magnetic track (B), the polarity of two adjacent magnets (M) of different sections (A) is the same, and **in that** in linear regions of the magnetic track (B), the sections (A) are arranged on the magnetic track (B) in steps of k * p, while in curved regions of the magnetic track (B), two successive sections (A) are positioned such that centres of the sections (A) are arranged on an imaginary circular path having a radius (R) corresponding to the curvature of the magnetic track (B) at spacings of p * (k + 1), wherein the centre of each section (A) is the centroid of the magnets (M) of this section (A) and wherein k the number of magnets (M) of a section (A) and p is their pole spacing (p), and **in that** the magnets (M) of each section (A) intersect a tangent running through the centre of that section (A) on the imaginary circular path at right angles.

2. Magnetic track according to Claim 1, **characterized in that** the magnetic track (B) is built up from a large number of identical linear sections (A).

3. Magnetic track according to either of the preceding claims, **characterized in that**, for a curved region of the magnetic track (B), the relationship

$$R = (p * (n * (k+1) + 1)) / \alpha$$

is satisfied if R is the radius of curvature of the imaginary circular path in this region, $\alpha$ is the angle enclosed by the circular region, k is the number of magnets (M) of a section (A), p is their pole spacing (p) and n is the number of sections (A) in this curved region.

4. Transport device having a linear drive, comprising a magnetic track (B) according to one of the preceding claims and a runner (L), which includes a primary part of the linear drive, which is aligned with the magnetic track (B) forming a secondary part of the linear drive.

**Revendications**

1. Voie d'aimants pour un dispositif de transport servant à déplacer un induit (L) le long de la voie d'aimants (B), la voie d'aimants (B) étant constituée de plusieurs sections linéaires (A) comprenant respectivement un nombre pair d'aimants (M) de polarités alternées disposés sur un support (T), dans laquelle, dans des régions linéaires de la voie d'aimants (B), la polarité d'aimants voisins (M) est inversée à intervalles réguliers (p) sur des sections adjacentes (A), **caractérisée en ce que**, dans des régions incurvées de la voie d'aimants (B), la polarité de deux aimants voisins (M) de différentes sections (A) est identique, et **en ce que** dans des régions linéaires de la voie d'aimants (B), les sections (A) sont disposées par incréments de k * p sur la voie d'aimants (B) alors que dans des régions incurvées de la voie d'aimants (B), deux sections consécutives (A) sont positionnées de telle sorte que les centres des sections (A) sont disposés sur une trajectoire circulaire imaginaire ayant un rayon (R) correspondant à la courbure de la voie d'aimants (B) à des distances de p * (k + 1), le centre de chaque section (A) étant le barycentre géométrique des aimants (M) de cette section (A), et k étant le nombre des aimants (M) d'une section (A) et p étant leur distance polaire (p), et **en ce que** les aimants (M) de chaque section (A) intersectent perpendiculairement une tangente à la trajectoire circulaire imaginaire, s'étendant à travers le centre de chaque section (A).

2. Voie d'aimants selon la revendication 1, **caractérisée en ce que** la voie d'aimants (B) est constituée d'une pluralité de sections linéaires (A) identiques.

3. Voie d'aimants selon l'une quelconque des revendications précédentes, **caractérisée en ce que** pour une région incurvée de la voie d'aimants (B), la relation R = (p * (n * (k + 1) + 1)) / $\alpha$ est satisfaite si R est le rayon de courbure de la trajectoire circulaire imaginaire dans cette région, $\alpha$ est l'angle formé par la région incurvée, k est le nombre des aimants (M) d'une section (A), p est leur distance polaire (p), et n est le nombre des sections (A) dans cette région incurvée.

4. Dispositif de transport comprenant un entraînement linéaire, comportant une voie d'aimants (B) selon l'une quelconque des revendications précédentes, ainsi qu'un induit (L) qui contient une partie primaire de l'entraînement linéaire qui est alignée sur la voie d'aimants (B) formant une partie secondaire de l'entraînement linéaire.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5642013 A
- WO 2008087130 A1

- DE 102009002606 A1

**In der Beschreibung aufgeführte Nicht-Patentliteratur**

- A cost effective direct drive option for the Thirty Meter Telescope. *Proc. SPIE,* 2006, vol. 6273, 627335